# EUROPEAN PATENT APPLICATION

(11) **EP 3 088 818 A1**
(43) Date of publication of application: **02.11.2016**
(21) Application number: 15382208.5
(22) Date of filing: 27.04.2015
(51) Int. Cl.: F24J 2/54

(54) **TILTING STRUCTURE FOR SOLAR PANELS**

(71) Applicant: Teknikran Soluciones Para Gruas, S.L., 20280 Hondarribia (ES)
(72) Inventor: CHINCHURRETA DIAZ, Juan Cruz, 20280 HONDARRIBIA (ES)
(74) Representative: Igartua, Ismael

(57) **Abstract**

Tilting structure (1) and tilting assembly for solar panels (2), the tilting structure (1) comprising a torsion bar (3) suitable for rotating about its longitudinal axis (3a) and a support frame suitable for housing the solar panels (2). The support frame (4) is integral with the torsion bar (3) and comprises coupling points (7) arranged at least in the corners of the support frame (4). The tilting structure (1) also comprises driving means (5) passing through said coupling points and pulling on the support frame (4), causing the rotation of the torsion bar (3). The tilting structure (1) also comprises a counterweight (9) hanging from said driving means (5).

## Description

### TECHNICAL FIELD

The present invention relates to tilting structures for solar panels.

### PRIOR ART

Tilting structures causing the rotation of a plurality of solar panels are known. Normally, these solar panels are mounted on a framework which is attached to a torsion bar such that the framework and accordingly the solar panels also rotate when rotating said torsion bar. The rows of solar panels are arranged in North to South orientation and the solar panels rotate East to West such that the panels adopt the best possible inclination so that they are oriented in the most suitable manner with respect to the changing position of the sun at all times.

EP2657623 A2 discloses a tilting structure for solar panels comprising a rectangular support frame on which the solar panels are arranged and a torsion bar arranged on a central pillar. The torsion bar and the support frame are integral with one another, therefore rotation of the torsion bar also makes the support frame rotate. There is a coupling point in the four corners of the support frame for securing a steel cable. This tilting structure comprises two steel cables, both cables being diagonally arranged in the form of a W. The steel cables pull on the support frame, causing the rotation of the torsion bar and accordingly of the support frame.

### DISCLOSURE OF THE INVENTION

The object of the invention is to provide a tilting structure for solar panels, as defined in the claims.

The tilting structure for solar panels of the invention comprises a torsion bar which is suitable for rotating about its longitudinal axis and a support frame for housing the solar panels. The support frame is integral with the torsion bar and comprises coupling points arranged at least in the corners of the support frame. The tilting structure also comprises driving means passing through said coupling points and pulling on the support frame, causing the rotation of the torsion bar. The tilting structure also comprises a counterweight hanging from said driving means.

The tilting structure of the invention considerably increases sturdiness of the structure. The driving means are continuously pulling on the tilting structure, i.e., securing the structure, said driving means therefore act like holding elements, protecting both the tilting structure itself and the solar panels against gusts of wind, even static wind loads of over 180 miles an hour, earthquakes or against any other force applied on the structure.

In addition, the driving means are always tensioned as a result of the counterweight hanging from the driving means, preventing any back and forth movement of the tilting structure that may endanger the entire structure, such that the stability of the structure is assured. When the support frame rotates in one direction, the counterweight moves up or down accordingly, and since it hangs from the tensioner, the latter absorbs any elongation of the driving means that may occur due to expansions, for example. When the driving means lose tension, the situation is automatically self-corrected as a result of the counterweight, without requiring intervention of a technician.

Likewise, since there are no elements complicating the initial mounting of the structure, like springs, for example, the initial on site installation is much easier because one of the most complex operations is placing and tensioning the driving means.

Therefore, stability and reliability of the tilting structure is improved in a simple, economical and reliable manner with the tilting structure of the invention.

### DESCRIPTION OF THE DRAWINGS

Figure 1 is a perspective view of an embodiment of the tilting structure according to the invention.
Figure 2 shows a detail of the rear part of the tilting structure of Figure 1.
Figure 3 shows a detail of the front part of the tilting structure of Figure 1.
Figure 3A shows a detail of the operating means and reels of Figure 3 but without the tensioners and the electric box.
Figure 4 is a detail of the support frame of the tilting structure of Figure 1.
Figure 5 is a detail of one of the pulleys of the driving means of the tilting structure of Figure 1.
Figure 6 is a perspective view of an embodiment of a tilting assembly comprising two tilting structures according to the invention.
Figure 7 is a detail of the tilting assembly of Figure 6.

### DETAILED DISCLOSURE OF THE INVENTION

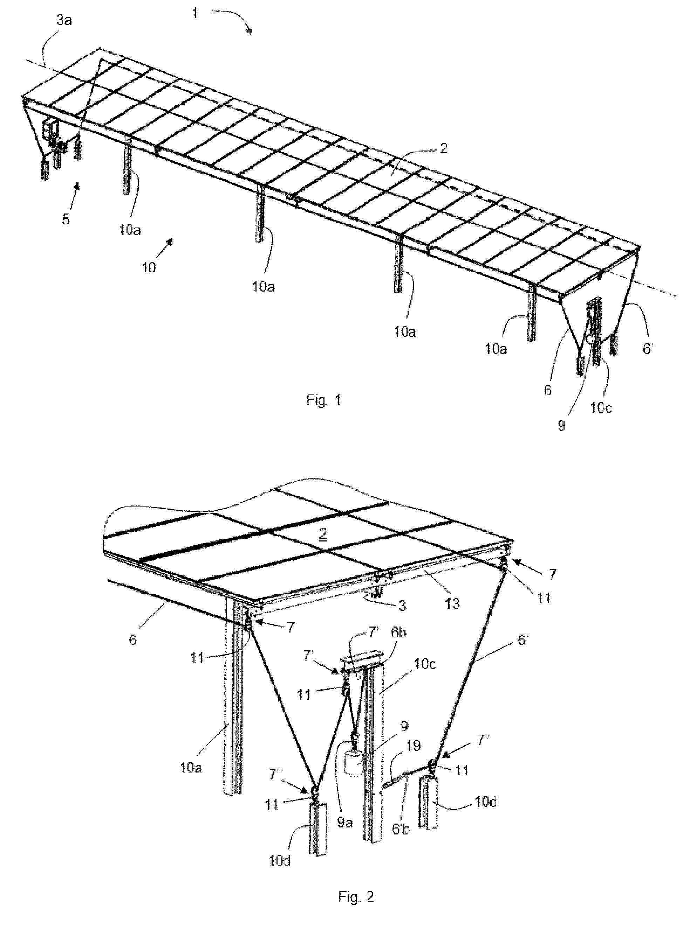

Figures 1 to 5 show an embodiment of the tilting structure 1 according to the invention. Solar panels 2, preferably photovoltaic panels, are placed on the tilting structure 1, though solar collectors could also be placed.

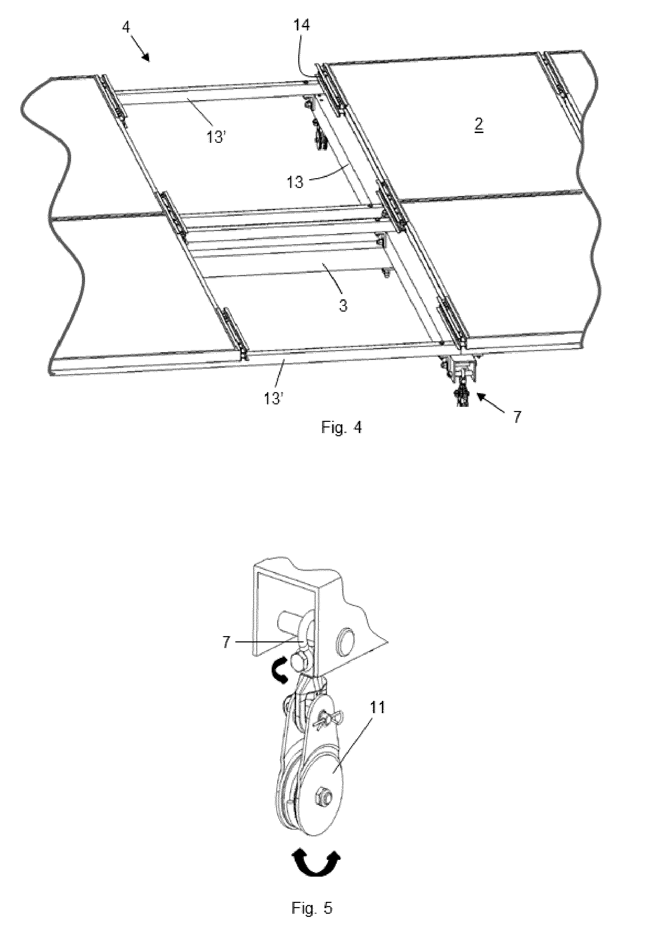

The tilting structure 1 according to said embodiment comprises a torsion bar 3 which is suitable for rotating about its longitudinal axis 3a and a support frame 4 suitable for housing the solar panels 2, as shown in further detail in Figure 4. The support frame 4 is integral with the torsion bar 3 and comprises coupling points 7 arranged at least in the corners of the support frame 4. The tilting structure 1 also comprises driving means 5 passing through said coupling points 7 and pulling on the support frame 4, causing the rotation of the torsion bar 3, which allows the tilting structure 1 to tilt. The tilting structure 1 also comprises a counterweight 9 hanging from the driving means 5.

The tilting structure 1 according to this embodiment considerably increases sturdiness of the structure 1. The driving means 5 are continuously pulling on the tilting structure 1, i.e., securing the structure 1, therefore said driving means 5 act like holding elements, protecting both the tilting structure 1 and the solar panels 2 against gusts of wind, even static wind loads of over 180 miles an hour, earthquakes or against any other force applied on the structure 1.

In addition, the driving means 5 are always tensioned as a result of the counterweight 9 hanging from the driving means 5, preventing any back and forth movement of the tilting structure 1 that may endanger the entire structure 1, so the stability of the structure 1 is secured. When the support frame 4 rotates in one direction, the counterweight 9 moves up or down accordingly, and since it hangs from the driving means 5, the latter absorbs any elongation of the driving means 5 that may occur due to expansions, for example. When the driving means 5 lose tension, the situation is automatically self-corrected as a result of the counterweight 9, without requiring intervention of a technician.

Likewise, since there are no elements complicating the initial mounting of the structure 1, like springs, for example, the initial on site installation is much easier because one of the most complex operations in structures of this type is placing and tensioning the driving means 5.

Therefore, stability and reliability of the tilting structure 1 is improved in a simple, economical and reliable manner with the tilting structure 1 of the invention.

According to the embodiment of the invention shown in Figures 1 to 5, the driving means 5 of the tilting structure 1 comprise two tensioners 6 and 6', preferably in the form of a cable, as shown in Figure 1. The first tensioner 6 is arranged on one side of the support frame 4 and the second tensioner 6' on the opposite side. Each tensioner 6 and 6' comprises an initial end 6a and 6a' and a final end 6b and 6b'.

In the preferred embodiment of the invention, there is only one counterweight 9, which is arranged close to the final end 6b of the first tensioner 6. A single counterweight 9 enables keeping both tensioners 6 and 6' tensioned regardless of the direction of rotation of the tilting structure 1. Nevertheless, in an embodiment not shown in the drawings a second counterweight 9 could optionally be placed hanging from the second tensioner 6', said additional counterweight 9 being arranged, for example, also close to its final end 6'b.

According to the preferred embodiment of the invention, the side edges of the support frame 4 also comprise coupling points 7 distributed along the sides of said support frame 4 to allow passage of the tensioners 6 and 6' as shown in Figure 1. Said coupling points 7 allow arranging the tensioners 6 and 6' at a higher level, i.e., at the level of the height of the support frame 4.

Each coupling point 7 of the support frame 4 on the same side of the structure 1 has a corresponding coupling point 7 which is arranged on the opposite side edge, such that in a preferred embodiment the coupling points 7 of the support frame 4 on the same side and the coupling points 7 on the opposite side are arranged such that they are facing one another, although they do not have to be facing, there being the same number of coupling points 7 on both sides of the support frame 4. Therefore, each side of the support frame 4 comprises a plurality of uniformly distributed coupling points 7, starting in a corner of said side and ending in the other corner on the same side. This configuration favors the forces securing the structure 1 being balanced, the support frame 4 therefore being secured better.

The support frame 4 according to the preferred embodiment of the invention comprises a plurality of cross girders 13 arranged uniformly along the torsion bar 3 and integrally attached to said torsion bar 3. A support girder 13' is arranged on each side of the structure 1, parallel to the torsion bar 3, each support girder 13' being supported and fixed at the ends of the cross girders 13, as shown in Figure 5.

As shown in the detail of Figure 4, a first row of solar panels 2 is arranged on one of the support girders 13' and torsion bar 3, and a second row of solar panels 2 is arranged on the other support girder 13' and torsion bar 3. One solar panel 2 from each row of panels has been omitted in Figure 4 for better understanding. In the preferred embodiment of the invention, the coupling points 7 of the support frame 4 are arranged at the ends of the cross girders 13, although it would also be possible to arrange them along the support girders 13'.

The support frame 4 according to the preferred embodiment of the invention also comprises guide supports 14 which facilitate and contribute to improving the attachment of the solar panels 2 to the support frame 4. In the example of the drawings, one guide support 14 is used for guiding and attaching to one another two contiguous solar panels 2 of the same row as shown in Figure 4.

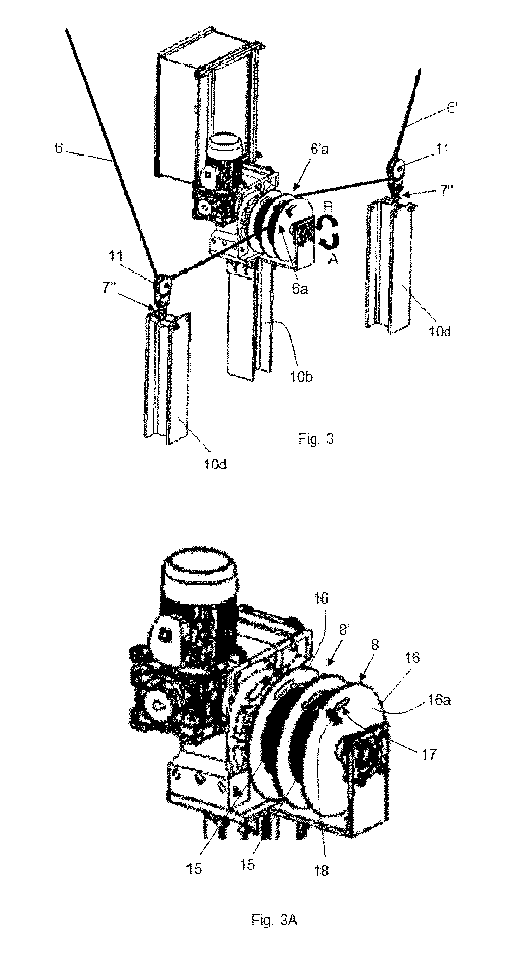

The driving means 5 of the tilting structure 1 according to the preferred embodiment also comprise two integral reels 8 and 8' mounted in series, as shown in the detail of Figure 3A. The reels 8 and 8' are operated by common operating means, preferably a motor, and they rotate said reels 8 and 8' in one direction or the other. Each reel 8 comprises a spool of thread shape, as shown in detail in Figures 3 and 3A. The initial end 6a of the first tensioner 6 is wound on the first reel 8 and the initial end 6'a of the second tensioner 6' is wound on the second reel 8', both tensioners 6 and 6' being wound in opposite directions such that while one reel, for example reel 8, tends to wind or take up the tensioner 6, the other reel 8' tends to unwind or let out the tensioner 6', such that the rotation of the support frame 4 is performed in a controlled manner.

Each reel 8 and 8' comprises a main body 15 comprising grooves, not shown in the drawings, making it easier for the corresponding tensioner 6 or 6' to be wound thereon, and it also comprises a base 16 having a larger diameter on each side, as shown in Figure 3A. Each base 16 comprises an opening 17 or the like allowing passage of the initial end 6a or 6'a of the corresponding tensioner 6 and 6' for fixing it on the outer face 16a of the corresponding base 16 of the reel 8 and 8'. Mounting of the driving means 5 is therefore hugely simplified. Once a small portion of the tensioner 6 or 6' has been wound on the main body 15 of the corresponding reel, the initial end 6a and 6'a of each tensioner 6 and 6' is fixed on the outer face 16a of one of the bases 16, preferably on the base 16 arranged at one end, because both reels 8 and 8' are arranged in series. After passing the initial end 6a and 6'a of each tensioner 6 and 6' through the opening 17 of the corresponding base 16, it is fixed to the outer face 16a of said base 16 by means of a retainer 18 which is fixed to the outer face 16a of the corresponding base 16, as shown in Figure 3A. Said retainer 17 retains the initial end 6a and 6'a of the corresponding tensioner 6 against the corresponding base 16. Optionally, said retainer could comprise two parts that are attached to one another, retaining the initial end 6a and 6'a of the corresponding tensioner 6 and 6' between both parts. In the preferred embodiment of the invention, the opening 17 of each base 16 comprises a half-moon shaped hole, but other shapes are not ruled out provided that passage of the initial end 6a and 6'a of the corresponding tensioner 6 is allowed, such as, for example, an oval-shaped hole, triangular-shaped hole, etc., and even instead of a hole it could comprise a groove located on the edge of the corresponding base 16.

The reels 8 and 8' and the operating means are arranged at one end of the tilting structure 1, as shown in Figure 1, where the initial ends 6a and 6'a of the two tensioners 6 and 6' are fixed as described in the preceding paragraphs. The final ends 6b and 6'b of the tensioners 6 and 6' are fixed at the opposite end of the tilting structure 1. The force required for pulling on the support frame 4 comprising the solar panels 2 and moving it is thereby optimized.

By way of non-limiting example, in the preferred embodiment of the invention each tensioner 6 and 6' comprises a steel cable such as that used in elevators, although another type of cable is not ruled out provided that it is able to pull on the structure 1 to cause the rotation thereof, as well as to keep the structure 1 in the desired position when the reels 8 and 8' are not operated, even when external forces for example considerably strong gusts of wind, act on the structure 1.

The tilting structure 1 according to the preferred embodiment of the invention also comprises a fixed structure 10 which is arranged on the ground of the terrain. Said fixed structure 10 comprises coupling points 7' and 7" allowing passage of the corresponding tensioner 6 or 6" at different heights, as will be described in detail below.

As shown in Figure 1, the fixed structure 10 comprises main pillars 10a on which the support frame 4 and torsion bar 3 are arranged. As a result of said main pillars 10a, the support frame 4 and solar panels 2 are raised off the ground, and therefore the tilting structure 1 is prevented from hitting against the ground when it is inclined.

In the non-limiting example of the drawings, the structure 1 comprises four main pillars 10a distributed uniformly along the torsion bar 3. The torsion bar 3 is mounted on said main pillars 10a with freedom of rotation, for example through bearings. The use of a larger or smaller number of main pillars 10a will depend on the length of the tilting structure 1.

According to the preferred embodiment of the invention, the fixed structure 10 of the tilting structure 1 also comprises a front pillar 10b arranged at one end of the structure 1 and a rear pillar 10c arranged at the opposite end. Said pillars 10b and 10c are arranged in a centered manner at the corresponding end and aligned with the main pillars 10a. The front pillar 10b has less height than the main pillars 10a and the reels 8 and 8' and operating means are arranged on said pillar 10b, as can be seen in Figure 3. The rear pillar 10c also has less height than the main pillars 10a and is preferably inverted L- or T-shaped. The final end 6b and 6'b of each tensioner 6 and 6' is fixed to said rear pillar 10c. As shown in Figure 2, said pillar 10c comprises at least one coupling point 7' to allow passage of the tensioner 6 on which the counterweight 9 hangs. This coupling point 7' is arranged close to the anchoring point of the final end 6b of the tensioner 6 on which the counterweight 9 hangs and at about the same height.

The fixed structure 10 also comprises at least one auxiliary pillar 10d arranged close to each corner of the support frame 4. In the preferred embodiment, the fixed structure 10 comprises four auxiliary pillars 10d, one for each corner of the support frame 4, i.e., in a location close to each corner of the support frame 4, as shown in Figures 1, 2 and 3.

Each auxiliary pillar 10d comprises a coupling point 7" to allow passage of the corresponding tensioner 6 or 6', said auxiliary pillars 10d having less height than the main pillars 10a and than the rear pillar 10c, such that passage of the tensioners 6 and 6' at different height levels is enabled. In other words, said auxiliary pillars 10d enables raising the corresponding tensioner 6 or 6' from the height of the corresponding reel 8 or 8' to the height of the support frame 4 at the front end of the tilting structure 1 and lowering in level again at the rear end. This arrangement of different levels enables the tensioners 6 and 6' to continuously pull on the support frame 4.

In the preferred embodiment of the invention, the front pillar 10b and the rear pillar 10c are arranged between two respective auxiliary pillars 10d, as shown in Figures 2 and 3.

The driving means 5 are mounted in the following manner. First, the way to mount the first tensioner 6 will be described in detail. As explained above, the initial end 6a of the tensioner 6 is wound on and fixed to the first reel 8, and the tensioner 6 is passed through the first coupling point 7" arranged in one of the auxiliary pillars 10d of the front part. The auxiliary pillars 10d of the front part and the front pillar 10b have about the same height so that the portion of the tensioner 6 going from the reel 8 to said first coupling point 7" is as horizontal as possible. The tensioner 6 is then passed through the coupling point 7 of the corner of the support frame 4 located closest thereto, thereby raising the tensioner 6. The tensioner 6 is then passed through all the coupling points 7 arranged on the same side of the support frame 4. The tensioner 6 therefore follows the outline of the support frame 4. After passing the tensioner 6 through the coupling point 7 of the opposite corner on the same side, said tensioner 6 passes through the coupling point 7" arranged on the rear auxiliary pillar 10d closest thereto, which is at a lower level, i.e., at a lower height, enabling the tensioner 6 to lower in level again. The tensioner 6 then passes through the coupling point 7' of the rear pillar 10c, which is located at a higher height. Before fixing the final end 6b of the tensioner 6 to a fixed anchoring of the rear pillar 10c, as shown in Figure 2, a movable coupling point 9a, i.e., a coupling point which is movable or slidable on the tensioner 6, is placed on the tensioner 6. The counterweight 9 is hung on said coupling point 9a, as shown in Figure 2.

As shown in Figure 2, the coupling point 7' of the rear pillar 10c and the fixed anchoring of the final end 6b of the first tensioner 6 are arranged in the cantilevered area of said pillar 10c such that the counterweight 9 can move freely. In the preferred embodiment of the invention, said coupling point 7' and said fixed anchoring are arranged at about the same height, the movable coupling point 9 being arranged between both points, such that said movable coupling point 9a is arranged below the coupling point 7' of the rear pillar 10c at least in an equilibrium position in which the tilting structure 1 is not inclined.

The final portion of the tensioner 6, i.e., the portion of the tensioner 6 between the coupling point 7' and the fixed anchoring point, takes on a V shape because the counterweight 9 hangs from that portion and is therefore continuously pulling on the tensioner 6. It could be said that the counterweight 9 acts like a continuous tensioning element because it continuously and automatically tenses the cable 6.

When the operating means act on the reels 8 and 8' to wind or unwind the cable 6, the counterweight 9 will be raised or lowered, making the V shape more or less pronounced. The movable coupling point 9a is also raised or lowered with the counterweight 9, as is evident. When the reel 8 rotates in direction A, for example in the clockwise direction, the tensioner 6 is wound on the reel 8, so the portion of cable of the tensioner 6, i.e., the portion of cable between the coupling point 7" of the front auxiliary pillar 10d and the final end 6b of the tensioner 6, will tend to be shortened such that the counterweight 9 will be raised. In this position, the tensioner 6 is what pulls on the support frame 4, causing the rotation thereof, making the corresponding side approach the ground.

Depending on the maximum degree of inclination of the tilting structure 1 and/or the length of the structure 1, more final portion may be required, therefore, the rear pillar 10b can be raised so that the counterweight 9 can have a longer path of travel or said final portion can be arranged in W shape rather than V shape. The dimensions and weight of the counterweight 9 are established according to the length of the tensioner 6 and the dimensions of the structure 1.

When the reel 8 rotates in the opposite direction B, i.e., counterclockwise direction, the first tensioner 6 is unwound from the reel 8, so the portion of cable of the tensioner 6 between the coupling point 7" of the front auxiliary pillar 10d and the final end 6b of the tensioner 6 will tend to be lengthen such that the counterweight 9 will be lowered. In this situation, the first tensioner 6 will allow the support frame 4 to be inclined in the opposite direction.

When the tilting structure 1 has reached the desired position, the operating means stop and the structure 1 remains in said position because the tensioners 6 and 6' continue pulling on the support frame 4.

The length of the portion of cable of the tensioner 6 that is wound on or unwound from the first reel 8 must be the same as the length of portion of the second tensioner 6' that is unwound from or wound on the second reel 8'. Therefore, it is evident that the two tensioners 6 and 6' must be synchronized, which is assured with the tilting structure 1 of the invention, because the reels 8 and 8' are integral with one another. This thereby allows the tilting structure 1 to be able to rotate in a precise and controlled manner while at the same time allows the structure 1 to remain secured in said desired position.

The description given for the first tensioner 6 applies to the second tensioner 6' which is arranged on the other side of the tilting structure 1, taking into account that it is wound on the second reel 8' in the opposite direction, so it is understood that further explanation is not required. The only difference between the first tensioner 6 and the second tensioner 6', that is if another counterweight does not hang from the second tensioner 6', is the manner in which the final end 6'b is fixed to the rear pillar 10c. In the preferred embodiment of the invention, where there is no additional counterweight 9, after the final end 6'b of the second tensioner 6' passes through the coupling point 7" of the corresponding rear pillar 10d, it is fixed directly to the rear pillar 10b, as shown in Figure 2. In this case, it is not necessary to raise the tensioner 6' again so said end 6'b can be fixed at any height of the rear pillar 10b, although it is preferably fixed at the same height as the coupling point 7" of the auxiliary pillar 10d to keep said last portion of the tensioner 6' in the horizontal position. As shown in Figure 2, the final end 6'b of the second tensioner 6' is fixed to the rear pillar 10b through a tie rod 19, although the use of said tie rod 19 is not indispensable.

To make passage of the tensioners 6 and 6' easier, all the coupling points of the fixed structure 10, i.e., the coupling points 7 of the support frame 4, the coupling points 7' of the rear pillar 10c, the coupling points 7" of the auxiliary pillar and the movable coupling point 9a, comprise a pulley 11 like the one shown by way of example in Figure 5. In the preferred embodiment of the invention, said pulleys 11 are hinged to allow optimal orientation of the tensioners 6 and 6' at all times.

As discussed throughout the description, the counterweight 9 which hangs from the first tensioner 6 in the preferred embodiment of the invention keeps said cable 6 tensioned at all times, being able to absorb any irregularity of the structure 1, such as the unwanted tension loss or elongation of the cable 6, for example. Since both sides of the structure 1 are secured by tensioners 6 and 6', i.e., the first tensioner 6 and the second tensioner 6' are interrelated with one another, a single counterweight 9 can keep not only the first tensioner 6 but also the second tensioner 6' tensioned at all times. If the second tensioner 6' were to lose tension for any reason, for example due to expansion, the corresponding side of the support frame 4 would tend to correct the inclination of the support frame 4 to keep the second tensioner 6' tensioned, therefore the tensioner on the side opposite, i.e., the first tensioner 6, would lose tension such that the counterweight 9 would move accordingly to keep the first tensioner 6 tensioned. Nevertheless, an additional counterweight 9 could also optionally be placed in the second tensioner 6' in a similar manner.

All the pillars of the fixed structure 10 of the preferred embodiment, i.e., the main pillars 10a, the front and rear pillars 10b and 10c and the auxiliary pillars 10d, have been depicted such that part of said pillars are buried in the terrain on which said structure 1 is going to be arranged, this method being one of the most common methods for fixing the structure 1 to the terrain.

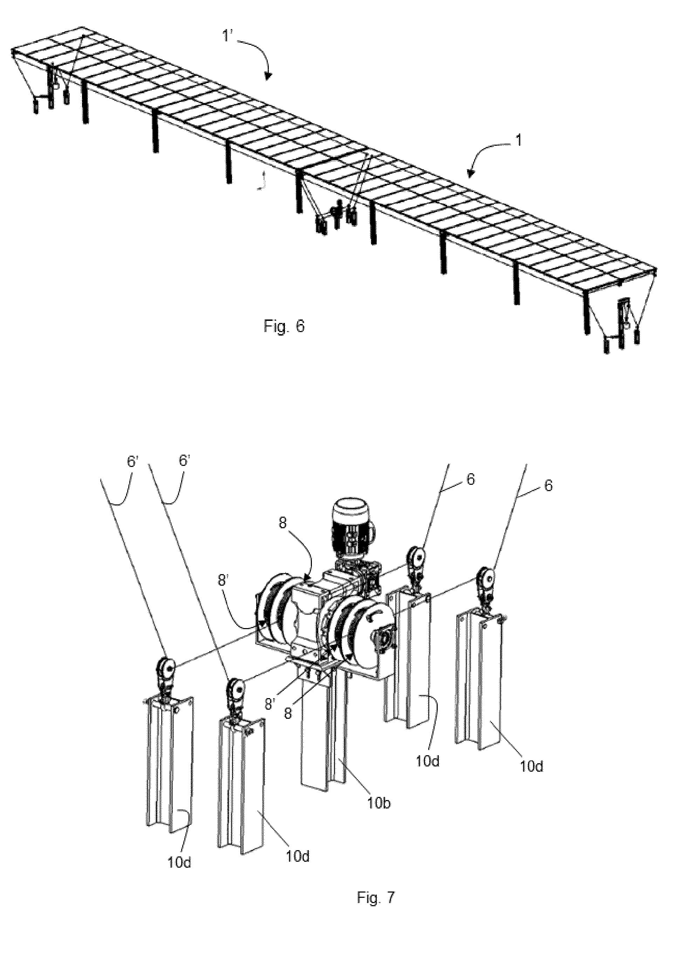

If the terrain allows it, it is possible to arrange a tilting assembly like the one shown in Figure 6, adding an additional tilting structure 1' to the tilting structure 1, arranged symmetrically to the described tilting structure 1, such that the operating means are common for both structures 1 and 1', a tilting assembly 100 being created.

In this tilting assembly, the two reels 8 and 8' of each tilting structure 1 and 1' are arranged on the same shaft of the operating means, as seen in Figure 7, therefore synchronization of the two structures 1 and 1' is assured.

## Claims

1. Tilting structure for solar panels (2) comprising a torsion bar (3) suitable for rotating about its longitudinal axis (3a), a support frame (4) for housing said solar panels (2) which is integral with the torsion bar (3) and comprising coupling points (7) arranged at least in the corners of said support frame (4), and driving means (5) passing through said coupling points (7) and pulling on the support frame (4), causing the rotation of the torsion bar (3), **characterized in that** the structure (1) also comprise a counterweight (9) hanging from said driving means (5).

2. Tilting structure according to claim 1, wherein the driving means (5) comprise two tensioners (6, 6') preferably in the form of a cable, the first tensioner (6) being arranged on a side of the support frame (4) and the second tensioner (6') being arranged on the opposite side, each tensioner (6, 6') comprising an initial end (6a, 6'a) and a final end (6b, 6'b), wherein the counterweight (9) is arranged close to the final end (6b) of one of the tensioners (6).

3. Tilting structure according to claim 2, wherein the structure (1) comprises two integral reels (8, 8') preferably operated by common operating means, each initial end (6a, 6'a) of each tensioner (6, 6') being wound on the corresponding reel (8, 8') in opposite directions, said reels (8, 8') being arranged preferably at one end of the tilting structure (1).

4. Tilting structure according to claim 3, wherein the final ends (6b, 6b') of the tensioners (6, 6') are fixed at the opposite end of the tilting structure (1).

5. Tilting structure according to claim 3 or 4, wherein the side edges of the support frame (4) also comprise coupling points (7) to allow passage of the corresponding tensioner (6, 6').

6. Tilting structure according to claim 5, comprising a fixed structure (10) which is arranged on the ground of the terrain, said fixed structure (10) comprising coupling points (7', 7") allowing passage of the corresponding tensioner (6, 6") at different levels.

7. Tilting structure according to claim 6, wherein said fixed structure (10) comprises main pillars (10a) on which the support frame (4) and the torsion bar (3) are arranged.

8. Tilting structure according to claim 7, wherein said fixed structure (10) also comprises a front pillar (10b) arranged at one end of the tilting structure (1), preferably in a centered manner at said end, on which the reels (8, 8') and operating means are arranged, said pillar (10b) having less height than the main pillars (10a).

9. Tilting structure according to claim 8, wherein the fixed structure (10) also comprises a rear pillar (10c), preferably inverted L- or T-shaped, arranged at the opposite end of the tilting structure (1) and aligned with the front pillar (10b), the final end (6b, 6'b) of each tensioner (6, 6') being fixed in said rear pillar (10c), said pillar (10c) preferably having less height than the main pillars (10a), and said rear pillar (10c) further comprising at least one coupling point (7') to allow passage of the tensioner (6) in which the counterweight (9) is arranged.

10. Tilting structure according to claim 9, wherein the fixed structure (10) also comprises an auxiliary pillar (10d) arranged close to each corner of the support frame (4), the front pillar (10b) and the rear pillar (10c) being arranged between two respective auxiliary pillars (10d), said auxiliary pillars (10d) preferably having less height than the main pillar (10a) and rear pillar (10c), and each auxiliary pillar (10d) comprising a respective coupling point (7") to allow passage of the tensioner (6, 6') at a lower level.

11. Tilting structure according to any of claims 6 to 10, wherein the tensioner (6) in which the counterweight (9) is arranged comprises a movable coupling point (9a) suitable for hanging said counterweight (9), said coupling point (9a) being slidable on said tensioner (6).

12. Tilting structure according to claim 11, wherein said movable coupling point (9a) is arranged between a coupling point (7') and the final end (6b) of the corresponding tensioner (6).

13. Tilting structure according to claim 11 or 12, wherein the coupling points (7) of the support frame (4) and/or the coupling points (7', 7") of the fixed structure (10) and/or the movable coupling point (9a) comprise a pulley (11), preferably hinged.

14. Tilting structure according to any of claims 2 to 13, wherein an additional counterweight is also arranged close to the final end (6'b) of the second tensioner (6'), preferably in a configuration symmetrical to the configuration of the first tensioner (6).

15. Tilting assembly, **characterized in that** it comprises two tilting structures (1; 1') according to any of claims 3 to 14 arranged in a symmetrical manner such that the operating means are common for both structures (1; 1').
